# EUROPEAN PATENT APPLICATION

(11) **EP 2 897 440 A1**
(43) Date of publication of application: **22.07.2015**
(21) Application number: 14198824.6
(22) Date of filing: 18.12.2014
(51) Int. Cl.: H04W 76/02, H04W 36/26, H04W 36/00

(54) **A method, devices and system to control provision of voice services in mobile communications networks**

(30) Priority: 19.12.2013 ES 201331862
(71) Applicant: Vodafone IP Licensing Limited, The Connection Newbury Berkshire RG14 2FN (GB); Vodafone España, S.A.U., 28108 Alcobendas (ES)
(72) Inventor: Dominguez Romero, Francisco Javier, London, W2 6BY (GB); Marino Lopez, Victor, London, W2 6BY (GB); Magdalena Alvarez, Pablo, London, W2 6BY (GB)
(74) Representative: Boult Wade Tennant

(57) **Abstract**

A system, method and devices for controlling provision of a voice service at a terminal of a first mobile communications network based on the expected quality of service. The presented embodiments improve the VolP service performance in mobile telecommunication networks solving the problems of current VolP services, providing to the user a good quality, especially in low coverage or congestion scenarios (reaching a similar quality than the CS voice calls in the same situations).

## Description

### Technical Field of the Invention

The invention relates to the provision of voice services based on expected quality of service to terminals in a mobile communication network.

### Background to the Invention

Long Term Evolution (LTE) is a standard for wireless communication of high-speed data for mobile phones and data terminals. It is partially based on previous network technologies (GSM/EDGE, UMTS...), increasing the capacity and speed using a different radio interface together with core network improvements. The standard is developed by the 3GPP (3rd Generation Partnership Project) and is specified in its Release 8 document series, with enhancements described in Releases 9, 10 and 11. LTE is considered by many to be a Fourth Generation (4G) technology, both because it is faster than 3G, and because, like the Internet, LTE uses a flat "all-IP" architecture where all information, including voice, is handled as data. LTE provides high and improve spectral efficiency in networks, allowing carriers to provide more data and voice services over a given bandwidth.

As it is well known in the prior art, there is a main classification for the voice services offered in mobile communications network, Voice over circuit switching (CS) services and Voice over Internet Protocol (IP) services.

Voice over circuit switching (Voice over CS) refers to the methodology for offering a voice communication service over a CS communication. It is used to offer voice services over 2G and 3G mobile networks. Circuit switching (CS) is a methodology of implementing a telecommunications network in which two network nodes establish a dedicated communication channel (circuit) through the network before the nodes may communicate. The circuit guarantees the full bandwidth of the channel and remains connected for the duration of the communication session. The circuit functions as if the nodes were physically connected as with an electrical circuit.

Voice over Internet Protocol (VoIP) is a methodology for the delivery of voice communications and multimedia sessions over Internet Protocol (IP) networks, such as the Internet. It differs from Voice over CS services in that it uses the PS (Packet Switching) technology to deliver the service, as opposed to the CS service. In packet switching, instead of being dedicated to one communication session at a time, network links are shared by packets from multiple competing communication sessions, resulting in the loss of the quality of service guarantees that are provided by circuit switching.

VoLTE (Voice over IP over LTE) is a Voice over IP service provided by the LTE networks, it is based on the IP Multimedia Subsystem (IMS) network, with specific profiles for control and media planes of voice service on LTE as defined by the GSM Association (GSMA) in PRD IR.92. In this approach the voice service (control and media planes) is delivered as data flows within the LTE data bearer. This would mean that there is no dependency on (or ultimately, requirement for) the legacy Circuit Switching voice network to be maintained.

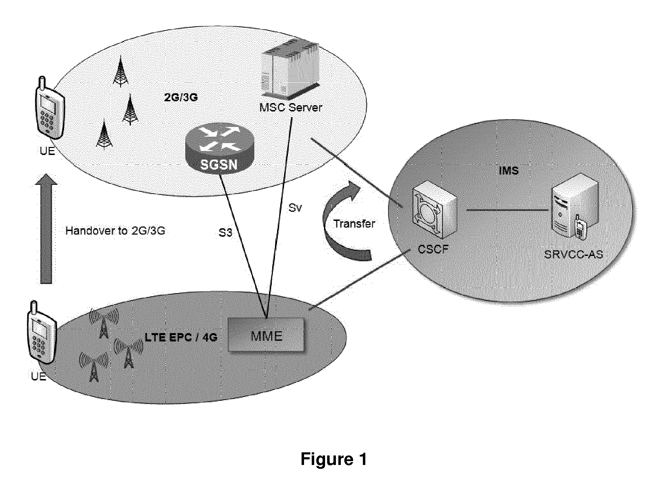

VoLTE is a technology already available and working commercially (e.g. in countries like South Korea). In situation where LTE coverage is not as good as 3G coverage, VoLTE should be able to smoothly perform a handover (without interruption) of the voice call to a 3G or 2G networks in case of poor LTE signal quality. This is done, for example, by the Single Radio Voice Call Continuity (SRVCC) service which provides handover functionality from IMS PS domain (VoLTE) to 3G or 2G communication networks with VoIP technology using one single radio signal at a time. Figure 1 shows schematically some of the nodes involved in said SRVCC service. The service is based on a SRVCC application server (SRVCC-AS) responsible for anchoring voice call and managing handover (through the CSCF) on request from a node (e.g. the Mobility Management Entity, MME) of the LTE access network (Evolved UTRAN). For SRVCC from the LTE access network (E-UTRAN) to 2G/3G access network (UTRAN/GERAN), the MME first receives a handover request from the E-UTRAN (e.g., from an e-Node B) with the indication that this is for SRVCC handling. Then the MME triggers the SRVCC procedure with the MSC Server (enhanced for SRVCC) via the Sv interface reference point. The MSC Server then initiates the session transfer procedure with the IMS network (e.g., with the SRVCC Application Server) and coordinates it with the CS handover procedure to the target cell. Then, the MSC Server sends a handover Response to the MME, which includes the necessary CS HO command information for the UE to access the UTRAN/GERAN. If there is a PS handover, information is sent to the SGSN via the S3 interface.

The drawback of making the handover to 3G/2G is losing some of the added services only possible over IMS, like the Video-telephony over IP.

When it is not possible to continue using the VoLTE service, an alternative solution would be to use VoIP over HSPA in a 3G network, in order to provide a service to the end user as similar as possible to the VoLTE (e.g., provided over IP).

VoIP over HSPA (VoHSPA) refers to the methodology for offering a VoIP service over an HSPA mobile network through the PS service. HSPA (High Speed Packet Access) is a packet-based data system, evolved from and backward compatible with Release 99 (Rel'99) WCDMA systems, which provides high-speed data transmission (up to 21 Mbps over a 5MHz bandwidth when using 64QAM modulation) in 3rd generation mobile telecommunication networks utilizing the WCDMA protocols, bringing improvement in terms of speed and latency reduction and enhancing support for high-performance packet data applications. HSPA improves the downlink by introducing HSDPA (High Speed Downlink Packet Access), which is based on shared channel transmission and its key features are shared channel and multi-code transmission, higher-order modulation, short transmission time interval (TTI), fast link adaptation and scheduling along with fast hybrid automatic repeat request (HARQ). Uplink is also improved with HSUPA (High Speed Uplink Packet Access). Enhanced Uplink adds a new transport channel to WCDMA, called the Enhanced Dedicated Channel (E-DCH). An enhanced uplink and downlink create opportunities for a number of new applications including for example, VoIP, uploading pictures and sending large e-mail messages. The enhanced uplink increases the data rate (up to 5.8 Mbit/s), the capacity, and also reduces latency. The enhanced uplink features several improvements similar to those of HSDPA, including multi-code transmission, short Transmission Time Interval (TTI), fast scheduling and fast Hybrid Automatic Repeat Request (HARQ).

There is a voice over HSPA IMS service defined by the GSM association in the PRD IR.58, similarly to the PRD IR.92 for VoLTE. In PRD IR.58, a number of HSPA, (Evolved) Packet Core, IMS core, and UE features which are considered essential to launch interoperable IMS based voice on HSPA, are defined. This document is based on the IMS Voice and SMS profile described in PRD IR.92 and the service is based on the Conversational PS Radio Bearers. This type of bearers provides Guaranteed Bit Rate and therefore absolute quality of service to fulfil the voice communications needs and also the possibility of doing SRVCC to the 2G/3G CS domain as explained before for VoLTE.

However the Conversational PS Radio Bearers are not available yet in most of the network infrastructure vendors and terminals manufacturers. So, the only possibility today to provide Voice over IP over HSPA is with a best effort PS Interactive or Background bearer. So the currently provided VoIP over HSPA service has a twofold problem:
- This service is not feasible in 2G due to the poor performance in terms of low bit rate and high latency of the 2G network, so the VoIP over HSPA calls will be dropped when losing 3G coverage without possibility of doing a handover like SRVCC towards the 2G CS service. And given that most of the 3G coverage is provided with 2100 MHz band, the coverage and performance of VoIP over HSPA in some areas of bad coverage will be poor.
- Moreover, as stated above, Voice over IP over HSPA service is provided using PS Interactive or Background bearers without any QoS Guaranteed. That is, it is always "best effort" (the service is provided with the best possible quality but without guaranteeing any minimum QoS). Then, in case of congestion the Voice over IP calls will be seriously affected due to latency, retransmission and low throughput. Today there are no solutions for bad VoIP performance due to low 3G coverage or high 3G congestion to reach a similar quality than the CS voice calls in the same situations.

The only solution to avoid the lack of 2G VoIP service is to deploy UMTS900 that has a similar coverage than the 2G but the problem is that UMTS900 is not deployed everywhere. Another solution is to deploy LTE in the 1800 and 800 bands but it might take several years and a big investment to deploy in every site of the network.

To solve the problem of high congestion, the only measure taken now is to prioritize the VoIP traffic with respect to the rest of the traffic. But this is not working very well in very high congested scenarios where all the "best effort" services suffer a lot. Currently, only CS Guaranteed service can resist this type of scenario.

Hence, there is a need to efficiently provide a user in a mobile communication network with the best voice service (e.g. fast, supporting multimedia) possible, providing at the same time a good quality, especially in low coverage or congestion scenarios, solving the problems of the VoIP over HSPA services currently used. The proposed embodiments of the invention stated below will provide mechanisms to achieve, among others, these advantages..

### Summary of the Invention

The present invention solves at least the aforementioned problems, and technical advantages are generally achieved, by disclosing a method, system and devices for use in a mobile telecommunication network, which improves the performance of prior art solutions.

It is proposed a technique that, based on an expected quality of service (which can be calculated in a cell basis or in a terminal basis) associated with a first type of voice service, it determines whether or not to allow the first type of voice service on a terminal. Hence, there is allowance or not of the first type of voice (end to end) service.

In the present text, the term "service" usually means an End-to-End Service. So, when there is a change from a first voice service to a second voice service according to the present invention, it implies a change in the Core Network domain (e.g. PS IMS network to CS MSC), in the signaling used (traditional CS Signaling versus SIP signalling), and the radio bearer could be the same for both (HSPA) or different (HSPA vs. R99-CS).

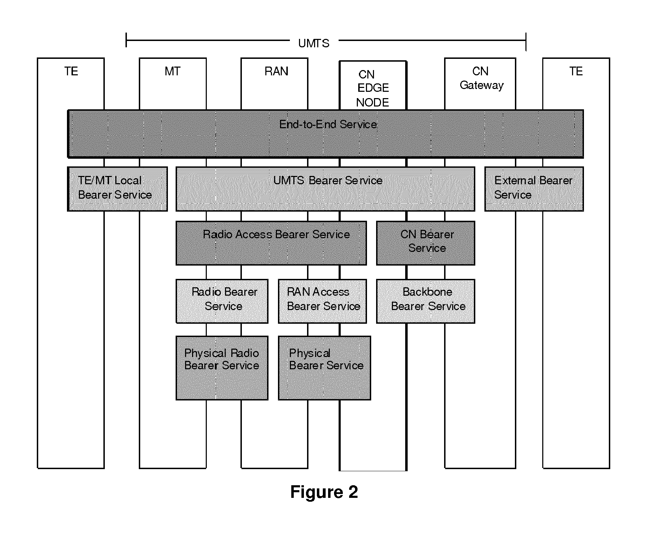

In other words, a change of "service" as disclosed in the present invention is a change in the "end-to-end" service rather than in a radio bearer as in the prior art solutions. As it will be shown in Figure 2, the Radio Bearer is the connection/channel between the Radio Access Network, RAN, (specifically the Radio Network Controller, RNC) and the terminal.

In figure 2, it is shown a schematic diagram showing different type of bearers in the 3GPP architecture according to the 3GPP standard (Technical Specification TS 23.107), where an overview of the different Levels of Quality of Service (QoS) is presented. Network Services are considered end-to-end, this means from a Terminal Equipment (TE) to another TE. An End-to-End Service may have a certain Quality of Service (QoS) which is provided for the user of a network service. It is the user who decides whether he is satisfied with the provided QoS or not. A bearer service includes all aspects to enable the provision of a contracted QoS. These aspects are among others the control signalling, user plane transport and QoS management functionality. On its way from one terminal (TE) to another terminal the traffic pass through different bearer services of the network(s). A TE is connected to the UMTS network via a Mobile Termination (MT) point. As shown in figure 2, the End-to-End-Service used by the TE will be performed using a TE/MT Local Bearer Service, a UMTS Bearer Service, and an External Bearer Service. TE/MT Local Bearer Service and the External Bearer Service are outside the scope of the UMTS network. The UMTS bearer has two parts: the Radio Access Bearer Service and the Core Network Bearer Service. The Radio Access Bearer Service provides confidential transport of signalling and user data between MT and Core Network (CN) Edge Node with the QoS according to the negotiated UMTS Bearer Service or with the default QoS for signalling. The Core Network Bearer Service of the UMTS core network connects the UMTS CN Edge Node with the CN Gateway to the external network. The role of this service is to efficiently control and use the backbone network in order to provide the contracted UMTS bearer service. The Radio Access Bearer Service is performed by a Radio Bearer Service and a RAN (Radio Access Network) Access Bearer Service. The Radio Bearer Service (supported by the Physical Radio Bearer Service) covers all the aspects of the radio interface transport. The RAN Access Bearer Service (supported by the Physical Bearer Service) provides the transport between the Radio Access Network and the Core Network.

There are many different types of bearers depending on the technology used, for example, the HSDPA, R99 12.2 Kbps, and the HSUPA (in order to refer to both HSUPA and HSDPA bearers, the term HSPA is used). The change of radio bearer is usually done many times in a network due to congestion or radio conditions. In some prior art solutions, what it is proposed it is only a change in radio bearer according to the service conditions.

For example, document US2010215034 describes a method in which, based on conditions associated with the voice call, a different transport mechanism for the voice call is selected. In said document, two bearers belonging to the same domain (CS domain) are switched/reconfigured based on said conditions. So either the service with the well-known Release 99 Dedicated Channel (CS-R99) is provided or CS service over an HSPA bearer, CS-HSPA is provided. However, said document does not disclose the fact that, based on expected quality of a call type on a first domain (PS), a decision is made on which call type and domain to allow (as proposed by the present invention) and, in said document, the CN connection (Radio Access Bearer and CN Bearer) is not changing. Moreover, CS-HSPA is almost not used in the current commercial mobile communications networks because most of the terminals and some infra-vendors do not implement it.

According to a first aspect of the present invention, it is provided a method of controlling provision of a voice service for a terminal in a mobile communications network, the method comprising: determining, based on at least a service parameter associated with a first type of voice service, whether to enable use of said first type of voice service for the terminal.

Said service parameter may be associated with at least one cell of the mobile communications network. The method may further comprise: disabling, at the least one cell, the first type of voice service when the service parameter is indicative of insufficient expected quality of service in the event of use of the first type of voice service by the terminal.

In order to perform the disablement, said first type of voice service may be configured at a network node (e.g. a Radio Network Controller) as disabled for said at least one cell.

Said service parameter associated with at least one cell, which is indicative of the expected quality of service for the first type of voice service may be the congestion detected in said at least one cell or optionally the service parameter can be calculated based at least partially on the quality of service of the last M calls using the first type of service in said at least one cell, where M is a design parameter.

Said service parameter may be associated with the terminal. The method may further comprise: disabling, at the terminal, the first type of voice service when the service parameter is indicative of insufficient expected quality of service for the terminal in the event of use of the first type of voice service.

In order to perform the disablement, said first type of voice service may be configured at a network node (e.g. a Home Subscriber Server) as disabled for said terminal (or for the subscriber associated to said terminal).

Said service parameter associated with the terminal, which is indicative of the expected quality of service for the first type of voice service for the terminal may be calculated based at least partially on the quality of service of the last N calls of the terminal using the first type of service, where N is a design parameter. Said quality of service may be based at least partially in at least on one of the following Key Performance Indicators for said terminal: Drop call rate ratio, failure ratio, MOS, Throughput or Latency.

So said service parameter, which is indicative of the expected quality of service for the first type of voice service, may be a quality parameter associated with at least a part of the mobile communications network. As it has been explained in the previous paragraphs, it can be for example associated to a cell (e.g. the congestion detected in said cell) or to a single terminal (e.g. the quality of service of the last N calls of the terminal using the first type of service).

In both cases (service parameter associated to a cell or to the terminal), if the first type of voice service is determined to be disabled, a second voice service (e.g. a voice over CS service) will be provided at the terminal.

As stated before, the disabling of the first type of voice service (at cell or at terminal level) is made when the service parameter is indicative of insufficient expected quality of service in the event of use of the first type of voice service by the terminal. Said use can be a current use or a future use or, in other words, said expected quality may be determined for a real current scenario (based on quality information of a current use of said first type of service by said terminal) or for an hypothetical future scenario.

For example, if the measured quality for a current call using the first type of voice service in a terminal is bad, then said first type of service is disabled during the call because it is not working properly. That is, in this case, the service is disabled because the expected quality of service in the event of current use of the first type of voice service by the terminal is insufficient. For example, during a call in a terminal using VoLTE, the application may decide to "disable" it based on the fact that the current quality of VoLTE is not good enough, and therefore it will be "expected" an insufficient quality of service for VoLTE. Then, the current call is handover to another service (e.g. VoHSPA). When the terminal will try to connect again using VoLTE, said service will not be allowed and the terminal will be allowed to use VoHSPA only (at least the service has been enabled again because the quality conditions have changed).

In another example, based on the congestion detected on the cell or in the KPIs measured for the terminal or in the quality of the last N calls, it is assumed that if the terminal is going to switch to said first type of service (future use), the quality of service "expected" for the terminal would not be good enough, so the first type of service is disabled. That is, in this case, the service is disabled because the expected quality of service in the event of a future use of the first type of voice service by the terminal is insufficient.

The first type of voice service may be any known voice service as for example, a Voice over IP over HSPA service or a Voice over LTE, VoLTE, service..

In an embodiment, in the event of a handover of a voice call from a first cell of the mobile communications network to a second cell of the mobile communications network, the method further comprises: switching a current voice service to the first type of voice service if the first type of voice service is enabled at the second cell and/or at the terminal. In this case the method may be performed by an e-node B of the mobile communications network.

In another embodiment, in the event of a handover from a first cell of the mobile communications network to a second cell of the mobile communications network, the method further comprises switching a current voice service to a second type of voice service if:
(i) the expected quality of service for the terminal in the event of use of the first type of voice service by the terminal is insufficient (for example, a first cell, LTE cell, is to hand over to a second cell,3G cell, but the customer 3G quality is not sufficient. Accordingly, the switch is to a second type of voice service (e.g., 3G CS or 2G CS); or
(ii) the first type of service is disabled at the second cell (for example, a first cell (LTE cell) is to hand over to a second cell (3G cell), but the second cell is marked as "no VoHSPA" (i.e., the first type of voice service is disabled. Accordingly, the switch is to a second type of voice service(e.g., 3G CS or 2G CS).

The first cell may use a first Radio Access Technology, RAT (e,g, an LTE-based RAT) and the second cell may use a second RAT (e.g. an 3G-based RAT).

The determination whether to enable use of said specific voice service at the terminal in the mobile communications network may be made as well in order to establish a new voice call for said terminal using said first type of voice service. In this case the method may be performed by a Radio Network Controller of the first mobile communications network.

According to a second aspect of the invention, it is provided a network element for controlling provision of a voice service for a terminal in a mobile communications network, the network element being configured to: determine, based on a service parameter associated with a first type of voice service, whether to enable use of said first type of voice service for the terminal.

According to a third aspect of the invention, it is provided a system for controlling provision of a voice service for a terminal in a mobile communications network, the system being configured to: determine, based on a service parameter associated with the first type of voice service, whether to enable use of said first type of voice service for the terminal.

The network element or the system may be also configured to perform the steps of any of the above disclosed methods.

According to a fourth aspect of the invention, it is provided a terminal for use in the previously mentioned system, wherein the terminal comprises at least one functionality configured to perform the respective steps of any one of the above disclosed methods

It will be understood that any of the features described herein in connection with the network element can equally be provided as steps in the method of the first aspect and vice versa. Beneficially, the present invention also provides a computer program configured when operated by a processor to perform any one of the above-described methods and a digital data storage medium is also provided encoding a machine-executable program of instructions to perform any of the methods disclosed.

Any combination of the features described in connection with either the first, second or third aspects are also provided, even if not explicitly disclosed.

### Brief Description of the Drawings

The invention may be put into practice in various ways, one of which will now be described by way of example only and with reference to the accompanying drawings in which:
Figure 1 shows a schematic block diagram of the SRVCC service.
Figure 2 shows a schematic diagram showing different type of bearers in the 3GPP architecture according to the 3GPP standard.
Figure 3 shows a flow chart of a voice service provision procedure, according to an embodiment of the invention.

### Detailed Description of a Preferred Embodiment

The present invention may be embodied in other specific devices, systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

In the present text, the terms "terminal" and "user equipment" are going to be used indistinctly to refer to the same concept, the communications terminal used by an end user (i.e. a subscriber) of the mobile telecommunications network to communicate over it. This terminal or user equipment may include any device capable of transmitting and receiving data (e.g., voice, text, images, and/or multimedia data) over the mobile communications network. For example, the terminal may be a mobile telephone, a smart phone, an electronic notepad, a personal digital assistant (PDA), a tablet, a laptop, a personal computer...

The present invention proposes a technique for providing voice service to a terminal in a mobile communications network based on the expected quality of service.

Said mobile communications network can be any type of mobile communications network (as for example 2G, 3G, 4G, 5G, LTE networks...).

Nowadays, it is normal that a single mobile communications operator have different inter-connected networks using different technologies (2G, 3G, 4G, 5G, LTE networks). In other words, the mobile communications network of a single network operator can be seen as a network including different inter-connected networks using different technologies (2G, 3G, 4G, 5G or LTE). That is, the mobile communications network of a single operator comprises cells using different types of Radio Access Technology (e.g. LTE based RAT, 3G based RAT, 2G based RAT).

In an embodiment, the mobile communications network is configured to identify expected call quality (directly or through a service parameter indicative of said expected quality) of a voice call (for example on a "per cell" or "per terminal" basis) and, if the expected call quality is above a threshold, enable the call, either "per cell" (e.g. at the RNC) or "per user equipment (per subscriber)" (e.g. at the HSS).

In an embodiment, said voice call is a VoIP over HSPA call and if the expected call quality is below a threshold (e.g. the service parameter indicative of said expected call quality is below a threshold), VoIP calling over HSPA is disabled (i.e. allowing only circuit switched calling).

In an embodiment, for a terminal making a VoLTE call and undergoing a cell handover to 3G, the network is configured to, if expected call quality is below a threshold, disable VoIP over HSPA (for a subscriber or for a whole cell) at the network. The network may also be configured to identify the expected call quality based on previous VoIP over HSPA call quality (again, either in that cell or based on previous calls by the terminal).

In other words, the cases in which the voice service cannot be delivered with sufficient quality should be detected and more specifically, the cases in which the VoIP over HSPA (briefly called VoHSPA) service cannot be delivered with sufficient quality should be detected.

As stated before, the detection of the expected quality (e.g., the obtainment of the service parameter indicative of said expected call quality) may be performed in 2 different ways (in 2 different levels), per cell or per subscriber:
- Per cell: In this case the expected quality may be identified by detecting the high congested cells (that is, the service parameter indicative of the expected quality is the congestion). In case that a high congested cell is detected any VoIP over HSPA service in the cell is directly disabled (to do so the Radio Network Controller, RNC in charge of the cell does not enable the voice over IP over HSPA for said cell, so it will not be possible to provide this service in then cell). In order to detect congestion, many different procedures known from the prior art can be followed. For example, the congestion detection could be performed through traditional specific counters for traffic, congestion, power, interference, radio connection failures or a combination of them. The congestion of power in the power amplifiers and the Uplink interference received can be detected by the base station directly (and then reported to the RNC). The congestion can be detected at the RNC that manages all the RRC (Radio Resource Connection) connections with all the UEs, either by direct measuring of the specific counters previously mentioned or by receiving the reports from other nodes as for example, the base stations. If the RNC detects a high congestion situation in a certain cell, it will not enable the VoIP over HSPA in the high congested cell. This can be done for example, by changing a cell parameter in the RNC that indicates the possibility (or not) of doing VoHSPA call in said cell.
   So, for example, congestion is detected because the uplink Interference is higher than a threshold (e.g. -97 dBm) then the VoHSPA service is disabled in that cell for any of the future setup calls or for the current calls coming from VoLTE service, because the quality of service expected during the congestion phase will not be appropriated (the low throughput and big delay will affect the MOS, Mean Opinion Score, of the Voice quality).
   In an embodiment, the expected quality (e.g. the congestion detection) can be calculated for every cell of the mobile communications network (for example, every certain time period or triggered when the congestion is above a certain threshold, which is an event that can happen at any time.). In a second embodiment, the expected quality is calculated by request, so only if calculated for a cell if it is requested by the network (for example because a VoIP over HSPA is going to be established in said cell).

Also the expected quality at cell level, can be calculated by monitoring KPIs (drop call rate, failures, rejects, latency, throughput...) of other PS services for subscribers being served by the cell. And, according to said KPIs, it will be decided if the expected quality is below a threshold and so, the VoHSPA service is disabled for said cell. - Per terminal (or subscriber - also called subscriber 3G quality in 3G networks). When a subscriber (using a certain terminal) is suffering a bad quality in VoIP over HSPA (e.g. the quality is below a certain threshold), then it should be necessary to stop said service and offer the standard Circuit Switched voice service for said subscriber.

In order to detect the bad quality situation, many different procedures known from the prior art can be followed.

In an embodiment, to measure the quality at least one of the following KPIs (Key Performance Indicators) or a combination of them is used as a service parameter indicative of the expected quality (of course other known KPIs may be used as well):
▪ Drop call rate ratio.
▪ Call Setup Failure ratio
▪ MOS (Mean Opinion Score)
▪ Throughput
▪ Latency

The quality offered in the last N VoIP over HSPA calls (being N a design parameter) for said subscriber (for said terminal) may be used to calculate the service parameter indicative of the expected quality. For example, the expected throughput will be calculated as the average throughput of N last calls and if said averaged throughput is below a certain threshold the expected quality for the next call will be considered as "bad" or for example if more than 25% of the N last calls has been dropped, the expected quality for the next call will be considered as bad. All these KPIs can be measured at the RNC and the expected quality for the subscriber may be also calculated in the RNC. If the expected quality is below a threshold, the RNC will mark said subscriber in the HSS as "no VoHSPA" as it will be explained later.

So, for example if the customer has done 4 VoHSPA calls and 2 of them were dropped (reaching 50% call drop rate), the VoHSPA service is disabled for that customer, so that the next call will be done with normal CS voice service. Or another example, if the latency of the packets start to increase, the VoHSPA service is disabled so that the next call will be done with CS voice service.

In this case, the bad quality detection per subscriber is not possible using traditional counters (which are given per cell / NodeB / RNC and not per subscriber). The process used to calculate the expected quality could vary depending whether real time detection is required by the operator (or in other words, whether the operator requires reacting very fast to bad quality scenarios or not):
▪ Real time calculation process can be done through a tool sited between Radio Access Network (RAN) and Core domains which correlate Radio (RNC) and Core (lu-PS) traces in a synchronised way providing quality descriptive service-based KPIs per subscriber. The optimum place is to integrate this function in the RNC because all the information is passing through this node. As stated before, the quality measured in the last N VoIP over HSPA calls for said subscriber is used to calculate the expected quality. Using real-time processing the bad quality scenarios will be detected almost immediately.
▪ In the second case (no real time), trace recording and post-processing in a platform outside the RNC should be sufficient using data from the RNC. The traces of all the subscribers and all the cells are taken and saved in an external server with a processing tool to calculate the KPIs mentioned before per subscriber. As before, the quality measured (using the KPIs) in the last N VoIP over HSPA calls for said subscriber is used to calculate the expected quality. In this case (no real time processing with an external server) the bad quality scenarios will be detected with much more delay than in the real time scenarios (usually a minimum of 15 minutes of delay).

Moreover this quality detection can be combined with the subscriber location information, so that the bad quality situation (for example, high numbers of dropped calls) can be associated with an area and consider that if the subscriber changes the location, then maybe the quality will be better, but if the subscriber stays in the same location, the quality will be likely bad and it is better to maintain disabled VoHSPA. The location can be obtained from GPS of the UE or the Timing Advance measurements received by the base station. The detection can be also associated with some specific radio conditions, considering this is the reason of the bad quality. The radio conditions indicators may be one or both of the following measurements:
▪ RSCP: Received Signal Code Power.
▪ EcNo: The Ec (RSCP)/ No (RSSI - total receive power) is the received energy per chip divided by the power density in the band.

In an embodiment, the expected quality is calculated for every subscriber of the mobile communications network (for example, every certain time period). In a second embodiment, the expected quality is calculated by request, so only if calculated for a subscriber if it is requested by the network (for example because a VoIP over HSPA is going to be established for said subscriber).

Once a bad quality situation for a subscriber has been detected as explained above (e.g. the expected quality is below a certain threshold), the VoHSPA service is disabled for said subscriber. In order to do that, for example, said information for said subscriber can be stored in the Home Subscriber Server, HSS of the 3G mobile communication network (or in the Home Location Register in older mobile communications network) as a further attribute for said subscriber. That is, in the HLR or HSS, it is possible to define which services the subscriber is subscribed to; so it can be stored in said node that the VoIP over HSPA is not allowed for a certain subscriber. When a node network wants to know if a Voice over IP over HSPA call can be established for said user, it simply must query the HSS.

Two different implementation scenarios depending on the call setup are presented now: one for the voice setup in LTE and another one with the setup in 3G.

### Call setup using LTE Radio Access Technology.

If the call setup for Voice over IP is done in LTE, then the network will allocate a VoLTE call with full quality of service assured, which is available in the LTE networks. So the need of performing a handover to other network will appear only in case of mobility to a zone with poor LTE coverage or in case of high LTE load. In both cases, the decision to handover to VoIP over HSPA is up to the LTE base station (called eNode B) which is serving the call in the LTE network.
- If the handover target cell (using 3G Radio Access Technology), has been configured as not enabling VoHSPA (e.g. by the RNC as explained in the previous paragraph) because the quality of VoIP over HSPA in the target cell is bad (e.g. the congestion is above a certain threshold) then an SRVCC handover to 3G CS or 2G CS is triggered. The performance of an SRVCC handover to 3G CS or 2G CS is an standard feature known from the prior art. In this case there will be a change in the Core network domain (CS MSC versus PS IMS network) and signaling (traditional CS Signaling versus SIP signaling).
   The information of the configuration of VoHSPA in the 3G cell (if it is enabled or not) is obtained by the LTE network from the RNC controlling the 3G target cell. This can be done by a direct query from the e-nodeB to the RNC or for example, using the known procedures for obtaining target cell features or configuration information of the SRVCC handover defined by the standard (TS 23.216 Single Radio Voice Call Continuity (SRVCC);Stage 2). Even there are some specific references in this document about the determination of the neighbour cell list and the VoIP capable and incapable cells.
- If the handover 3G target cell, has been configured as enabling VoHSPA (because the quality of the target cell is fine, e.g. the congestion is below a certain threshold so VoHSPA is enabled) then the subscriber VoHSPA enablement is checked in the HSS:
   ▪ If the subscriber 3G quality detection is fine and therefore the VoHSPA is enabled in the HSS (or HLR), a PS handover from VoLTE to VoHSPA is performed, all in the PS domain.
   ▪ If the subscriber 3G quality detection is not ok and, therefore, the VoHSPA is not enabled in the HSS for said subscriber, then a SRVCC handover to 3G CS or 2G CS is triggered.

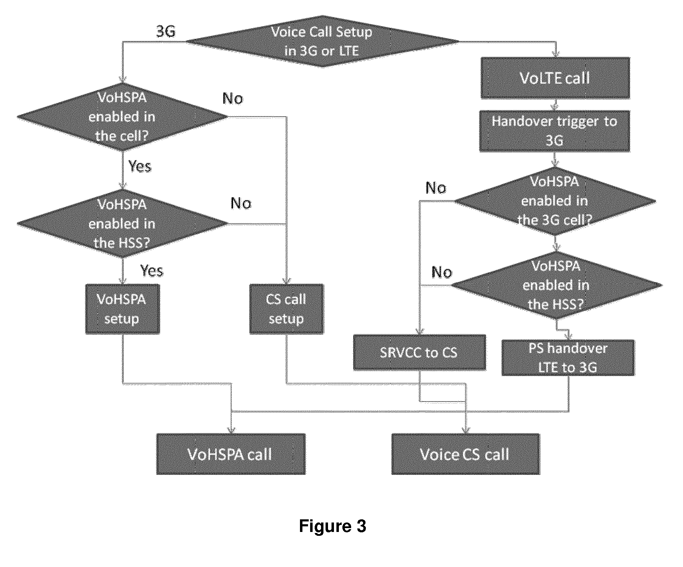

Summarizing, when a VoLTE call has been established using LTE Technology (301) and the network wants to handover (due to lack of coverage or high LTE load) the VoLTE call in a user equipment to a target cell using a second Radio Access Technology (e.g. 3G) (302) the following steps are performed (see figure 3) :
- A LTE network entity (e.g. the e-node B) checks if the VoHSPA is enabled in the target cell (303) and if VoHSPA calls are enabled for said subscriber (304).
- If VoHSPA is not enabled in the cell and/or for the subscriber, a SRVCC handover of the call (305) to a Circuit Switched voice call (using 3G or even 2G Radio Access Technology) (306) is performed .
- If VoHSPA is enabled for both the cell and the subscriber, then a PS handover (307) is triggered from aVoLTE service in the LTE network to a VoHSPA call (308) in the 3G network in the target cell is triggered.

In this scenario (namely, the call being set up using LTE Radio Access Technology), usually the radio part of LTE (the e-node B) is the decision point to control the VoLTE handover to 3G CS or to 3G PS, and therefore the allowance of the handover to VoIP PS 3G call. As explained before, the e-node B will obtain the information about whether the 3G cell is VoHSPA enabled (e.g. from the RNC of the 3G network) and it will obtain as well the subscriber information about whether the subscriber is VoHSPA enabled from the MME.

As explained before, similar to the case of the call setup done in 3G, when there is an expected bad quality of the VoHSPA session for a subscriber, then the VoHSPA is disabled for said subscriber in the HSS with a command line sent to the HSS to modify the parameter indicating the services to which said subscriber is enabled. Then the profile of the subscriber is downloaded from the HSS to the MME and the eNodeB can obtain has the information directly from the MME. Then the eNode B can take the proper decision with the information provided.

The procedure to perform a PS handover from VoLTE to VoHSPA or from VoLTE to a CS call is known from the prior art.

### Call setup using 3G Radio Access Technology

In case the VoIP over HSPA is setup in a 3G network, then it is not possible to make the change of technology during the call (in other words, it is not possible to decide which is the best technology during the call). However, a decision can be taken for the next call.

In this case, if the expected quality for a user is bad (determined KPIs of success rate are below a threshold), then this service is automatically disabled in the HSS by a command sent from the RNC for said user, so the next call for said user will not be a VoHSPA call.

Analogously, if the subscriber is being served by a cell with VoHSPA disabled due to the congestion detected in that cell, then no VoHSPA call is established in said cell.

So, when a subscriber is going to establish a voice call in a 3G cell (309), it is checked if VoHSPA service is enabled in the serving cell (310) (this is checked in the RNC controlling the cell) and for said subscriber (311) (this is checked in the HSS). If so then the call could be established using VoHSPA (312, 308). Otherwise the call would be established (313, 306) using circuit switched technology.

In those cases where the terminal is only allowed to perform Circuit Switched calls (the Packet Switched, PS, service is disabled), and a PS call is initiated towards the terminal, the mobile communications network, according to its capabilities will refuse or allow the call (it is possible to have a PS call in one terminal and CS call in another terminal with a Gateway function in the IMS network).

In some terminals, two buttons are implemented, one for CS calls and one for PS calls. Then if the terminals (originating or terminating the call) is not able to do a PS call (because it is disabled for said terminal), then the PS button will appear shadow (impossible to use, with no action). Generally speaking, when there is a button dedicated to PS calls, this is only working when the other terminal and the network can do PS calls.

In both scenarios (the call being set using LTE radio access network technology or using 3G radio access network technology), once the 'bad quality' status has been triggered and the VoHSPA service has been disabled (either for a whole cell or for a single subscriber) is important to specify when to enable again the service.
- Cell Case: When the cell congestion was the trigger point, then once the congestion in the cell is below a certain established threshold, the VoHSPA is enabled automatically for the subscribers in the cell. This may be just a change in the cell parameter, located in the RNC, that activates the possibility of doing VoHSPA calls.

As stated before, the RNC will detect a high congestion situation in a certain cell. So it will be the RNC, the node that, once the high congestion situation is gone, it enables again the VoIP over HSPA in the cell.
- Terminal/subscriber case: As stated before, the subscriber/terminal quality can be associated to a certain location or to certain radio conditions, so if the terminal/subscriber expected quality was the reason to disable the VoHSPA, then this is not anymore valid if the radio conditions or the location of the terminal /subscriber have changed. So, if the subscriber (and therefore the terminal used by the subscriber) has changed to a location with acceptable radio conditions or the user location has not changed but the radio conditions have improved significantly in the same area (in other words, the expected quality is above a certain threshold), the VoHSPA service will be enabled again. That is, the information in the HSS (or the HLR) will be changed so now the subscriber using the terminal will be enabled for VoHSPA. When the VoHSPA service is disabled for a user due to bad quality conditions, a timer can be set to enable again the service (i.e. to enable again the VoHSPA servicein the HSS). Or a timer can be set and when said timer expires, the expected quality is again calculated (as explained before, for example, monitoring KPIs as drop call rate, failures, rejects, latency, throughput...) to see if the radio conditions have improved or not.

The presented embodiments improve the VoIP service performance in mobile telecommunication networks solving the problems of current VoIP services, providing to the user a good quality, especially in low coverage or congestion scenarios.

Even though most of the embodiments shown are referred to quality detection in Voice over HSPA services, the present invention is not limited to this type of voice services but it can be applied to other types of voice services.

In this text, the word "comprises" and variants thereof (such as "comprising", etc.) must not be interpreted in an excluding manner, i.e., they do not exclude the possibility that what has been described may include other elements, steps, etc.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. Some preferred embodiments of the invention are described in the dependent claims which are included below.

Although the present invention has been described with reference to specific embodiments, it should be understood by those skilled in the art that the foregoing and various other changes, omissions and additions in the form and detail thereof may be made therein without departing from the scope of the invention as defined by the following claims.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method of controlling provision of a voice service for a terminal in a mobile communications network, the method comprising:
determining, based on service parameter associated with a first type of voice service in the mobile communications network, whether to enable use of the first type of voice service for the terminal.

2. A method according to claim 1, wherein said service parameter is associated with at least one cell of the mobile communications network, and wherein the method further comprises:
disabling, at the at least one cell, the first type of voice service when the service parameter is indicative of insufficient expected quality of service for the terminal in the event of use of the first type of voice service by the terminal.

3. A method according to claim 2, further comprising:
providing a second type of voice service for the terminal when the first type of service is determined to be disabled.

4. A method according to claim 1, wherein the service parameter is associated with the terminal, and wherein the method further comprises:
disabling, at the terminal, the first type of voice service when the service parameter is indicative of insufficient expected quality of service for the terminal in the event of use of the first type of voice service by the terminal.

5. A method according to claim 4, further comprising:
providing a second type of voice service at the terminal when the first type of service is determined to be disabled.

6. A method according to any of the preceding claims, wherein the service parameter for the first type of voice service is a quality parameter associated with at least a part of the mobile communications network.

7. A method according to any of the previous claims wherein said the first type of voice service is a Voice over Internet Protocol, IP, over High Speed Packet Access, HSPA service.

8. A method according to claim 3 or 5, wherein the second type of voice service is a voice over CS service.

9. A method according to any one of claims 2 to 8, wherein, in the event of a handover from a first cell of the mobile communications network to a second cell of the mobile communications network, the method further comprises:
switching a current voice service to the first type of voice service if the first type of voice service is enabled at the second cell and/or at the terminal.

10. A method according to any one of claims 2 to 8, wherein, in the event of a handover from a first cell of the mobile communications network to a second cell of the mobile communications network, the method further comprises:
switching a current voice service to a second type of voice service if:
(i) the expected quality of service for the terminal in the event of use of the first type of voice service by the terminal is insufficient; or
(ii) the first type of service is disabled at the second cell.

11. A method according to claim 9 or 10, wherein the first cell uses a first Radio Access Technology (RAT) and the second cell uses a second RAT.

12. A method according to claim 11, wherein the first RAT is an LTE-based RAT, the second RAT is a 3G-based RAT.

13. A network element or a system for controlling provision of a voice service for a terminal in a mobile communications network, the network element or the system being configured to:
determine, based on an service parameter associated with a first type of voice service in the mobile communications network, whether to enable use of the first type of voice service for the terminal.

14. A network element or a system according to claim 13, wherein the network element or the system is further configured to perform the steps of any one of the methods of claims 2 to 12.

15. A computer program comprising computer program code means suitable for performing the steps of any one of the methods of claims 1 to 12 when the aforementioned program is executed in a computer, a digital signal processor, a field-programmable gate array, a specific integrated circuit of the application, a microprocessor, a microcontroller or any other form of programmable hardware, included in a distributed manner.

16. A terminal for use in a system according to claim 13 or 14, wherein the terminal comprises at least one functionality configured to perform the respective steps of any one of the methods of claims 1 to 12.
